(19) Europäisches Patentamt / European Patent Office / Office européen des brevets

(11) **EP 3 680 877 A1**

(12) **EUROPEAN PATENT APPLICATION**

(43) Date of publication:
15.07.2020 Bulletin 2020/29

(51) Int Cl.:
*G08G 1/16* (2006.01)      *B60W 30/12* (2020.01)

(21) Application number: 19150772.2

(22) Date of filing: 08.01.2019

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Visteon Global Technologies, Inc.
Van Buren Township, MI 48111-5711 (US)

(72) Inventors:
• OTTO, Mathias
76327 Pfinztal-Söllingen (DE)
• PFEIFLE, Martin
72297 Seewald (DE)
• KARAMANOV, Nikola
Sofia 1113 (BG)

(74) Representative: MERH-IP Matias Erny Reichl
Hoffmann
Patentanwälte PartG mbB
Paul-Heyse-Strasse 29
80336 München (DE)

(54) **METHOD FOR DETERMINING THE LOCATION OF AN EGO-VEHICLE**

(57) A method for determining a current state vector describing location and heading of an ego-vehicle (EV) with respect to a lane boundary of a road comprises a step of obtaining road sensor data from at least one road sensor of the ego-vehicle (EV) detecting the lane boundaries of the road. In another step, a measured state vector of the ego-vehicle (EV) is calculated from the road sensor data. Furthermore, motion state data related to current heading and velocity of the ego-vehicle (EV) is obtained and a predicted state vector of the ego-vehicle (EV) is calculated based on the motion state data of the ego-vehicle and a previous state vector of the ego-vehicle (EV). Finally a current state vector is determined by calculating a weighted average of the measured state vector and the predicted state vector of the ego-vehicle (EV). The weights are determined based on characteristics of an upcoming section of the road.

Fig. 1

**Description**

TECHNICAL FIELD

One or more embodiments described herein relate to a method for determining the location of an ego-vehicle. In particular, a method for determining a current state vector describing location and heading of an ego-vehicle with respect to a lane boundary of a road is described. Furthermore, one or more embodiments described herein relate to an information processing device for determining a current state vector describing location and heading of an ego-vehicle with respect to a lane boundary of a road.

BACKGROUND

Modern road vehicles may be equipped with a large amount of sensors to perceive their environment. Sensors such as cameras, LiDARs or radars may be used to detect objects around a vehicle as well as road surface markings defining lane boundaries of a road the vehicle is travelling on. The detection and tracking of road boundaries and/or lane boundaries is an important task for driver assistance systems as many functions such as lane departure warning, lane keeping assistance, lane change warning systems, etc. depend on a correct representation of the lanes.

In order to achieve a correct representation of lanes, information from various sources may be fused together. The information may originate for example from sensors such as front facing perspective cameras, side-facing fisheye cameras, LiDARs, radars, from digital maps in combination with a Global Navigation Satellite System and/or an Inertial Measurement Unit (GNSS/IMU), and/or from trajectories of leading vehicles.

High Definition (HD) map information is often used mainly for longitudinal control, for example, in case speed limits or curves are ahead. Using map information for lateral control is more difficult, as the quality of the information derived from the map heavily depends on the precision of the positional and heading information of the ego-vehicle. Uncertainty in the ego-vehicle position and pose directly results in uncertainty in the line information retrieved from the digital map.

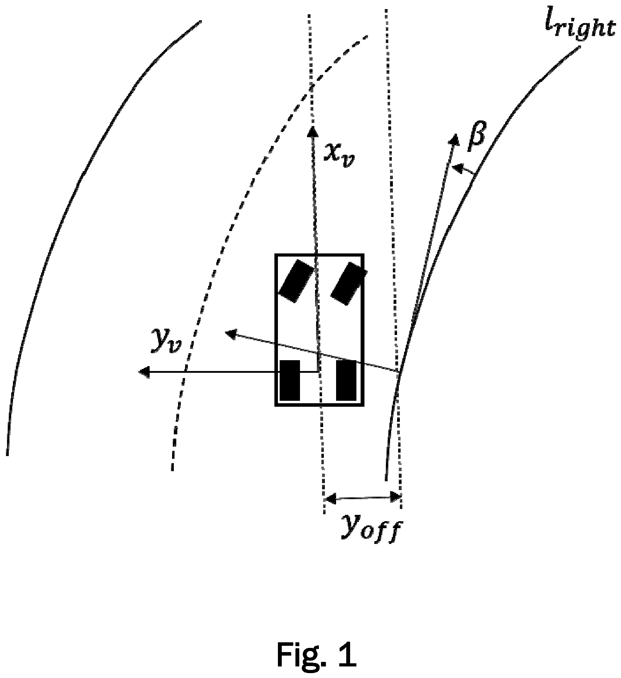

Many approaches use a clothoid road model for representation of lane boundaries or lane center lines, due to its high relevance and flexibility in road analysis owing to it being the favorable and common engineering solution to road and railway design. A common local approximation to the clothoid is based on the 3rd-order Taylor series. Fig. 1 depicts such a representation. Each lane boundary and the lane center line can be represented by a four dimensional vector in which the first two dimensions, $y_{off}$ and $\beta$, describe the translation and rotation to move the car coordinate system to the coordinate system described by the lane line, and the other two dimensions, $c_0$ and $c_1$, describe the lane line inherent curvature and its rate of change, respectively. This representation can be used for planning and execution to move the vehicle close along a centerline of a lane.

BRIEF SUMMARY OF THE INVENTION

One or more embodiments describe a method for determining a current state vector describing location and heading of an ego-vehicle with respect to a lane boundary of a road.

According to an aspect, the method comprises a step of obtaining road sensor data from at least one road sensor of the ego-vehicle detecting the lane boundaries of the road and calculating a measured state vector of the ego-vehicle from the road sensor data. The state vector can be described, for example, by a four-dimensional state vector describing the position and heading of the ego-vehicle with respect to the lane-boundary $l_{right}$.

In particular, the state vector is $X = \begin{pmatrix} y_{off} \\ \beta \\ c_0 \\ c_1 \end{pmatrix}$, wherein $y_{off}$ describes the offset between a reference point of the ego-vehicle and the lane boundary, $\beta$ describes the angle between the right lane boundary and the ego-vehicle's movement (i.e. the heading of the ego-vehicle), $c_0$ describes the curvature of the lane boundary, and $c_1$ describes the rate of change (first derivative) of $c_0$.

According to an aspect, the ego-vehicle may comprise one or more road sensors observing the road surface for detecting lane boundaries, such as one or more cameras, for example front facing perspective cameras, side-facing fisheye cameras, a LiDAR sensor, and/or a radar sensor. In particular, the lane boundary on the right side of the ego-vehicle with respect to the direction of travel may be detected in case of right-hand traffic. In the case of left-hand traffic, the lane boundary on the left side of the ego-vehicle with respect to the direction of travel may be detected.

The measured state vector may be calculated by an internal image processor of the ego-vehicle using image processing methods. Alternatively, the ego-vehicle may transmit the road sensor data to a server for image processing and receive the resulting parameters and/or state vector from the server. For this purpose the ego-vehicle may comprise a communication module for communicating wirelessly with the server. Outsourcing the process of image processing to a server may have the advantage, that processing power is not limited by the resources available in the ego-vehicle. Moreover, improvements to image processing algorithms can be implemented without having to provide software update to the ego-vehicle.

Mathematically, the step of measuring the current state vector of the ego-vehicle may be described as mapping the true state vector of the ego-vehicle into an observed space related to the measurement. The mapping function may be described by an observation model with can be expressed by a matrix. Every measurement exhibits inherent uncertainties referred to as the measurement noise. This measurement noise may be assumed to be zero mean Gaussian white noise, i.e. a randomly distributed statistical error. According to an aspect, the method comprises a step of obtaining motion state data related to current heading and velocity of the ego-vehicle and calculating a predicted state vector of the ego-vehicle based on the motion state data of the ego-vehicle and a previous state vector of the ego-vehicle. The motion state data may be generated by at least one motion sensor measuring a heading and/or a velocity of the ego-vehicle. The current heading of the ego-vehicle may be obtained by measuring the steering angle and/or by using a GNSS/IMU unit. The velocity of the ego-vehicle may be obtained, for example, from a velocity sensor of the ego-vehicle or by the GNSS/IMU unit. Starting out from a previously known state vector of the ego-vehicle, the current state vector may be predicted by a process known as dead reckoning.

Mathematically, the process of predicting the state vector of the ego-vehicle may be described using a state-transition model which is applied to a previous state vector. The state-transition model may be expressed as a transition function, which takes into account the state vector and the time difference $\Delta t$ between the former state and the predicted state. This function is often called process model. In addition, a process covariance matrix, often called motion or prediction noise, which covers the stochastic part of such a transition, is used. This stochastic part is necessary as the vehicle might change velocity, angle, and even acceleration within $\Delta t$. This stochastic part can be expressed by a matrix. In the case of the four-dimensional state vector described above, this matrix is a four-by-four matrix. The prediction process is subject to cumulative errors. On one hand, knowledge about the previous state vector may be inaccurate, on the other hand, the model describing the state-transition may not take into account all real-world influences. This prediction noise may be assumed to be a zero mean multivariate normal distribution.

According to an aspect, the method further comprises a step of determining a current state vector by calculating a weighted average of the measured state vector and the predicted state vector of the ego-vehicle. The steps of calculating the measured state vector and the predicted state vector both provide estimates of the true state vector. When calculating the weighted average, more weight may be given to the estimate with a higher certainty, i.e. the estimate with a smaller error. Thus, by combining the measured and predicted estimates of the state vector, a more accurate estimate of the current state vector can be obtained.

According to an aspect, the weights are determined based on characteristics of an upcoming section of the road. In particular, the curviness of the road may be considered for determining the weights. For example, when driving on a (essentially) straight highway, the state vector of the ego-vehicle will be rather stable. Thus, the prediction of the state vector may yield very accurate results. In such a case it is preferred to avoid potentially erroneous measurements from the at least one road sensor to affect the otherwise stable state vector. The method may thus give a higher weight to the predicted state vector when driving on a (essentially straight) highway.

In another scenario, the ego-vehicle is driving on a curvy road, for example, in an urban environment or on a mountain road. In such a scenario it is important to have the incoming measurements from the at least one road sensor to immediately influence the state vector. Thus, the method may weigh the measured state vector higher than the predicted state vector. The term "curvy road" refers to a road with a high average and/or high maximum curvature. For example, the curvature of a road may be considered "high" when the curvature is larger than a predefined threshold. Furthermore, a curvature may be considered high, if the average velocity of leading vehicles along the road is below a predefined threshold. In particular, the average velocity of leading vehicles may be evaluated in each curve. A curve having an average velocity of less than 80 km/h may be classified as moderately curvy. A curve having an average velocity of less than 60 km/h may be classified as very curvy. A curve having an average velocity of less than 40 km/h may be classified as extremely curvy. For each of the previous examples, a dedicated set of weights for the measured state vector and the predicted state vector respectively may be predefined

According to an aspect, the characteristics of the upcoming section of the road are obtained from a high definition (HD) map based on current location information of the ego-vehicle obtained from a location sensor of the ego-vehicle. In particular, a location of the ego-vehicle on the map is determined using the location data provided by the location sensor. Furthermore, the further route path of the ego-vehicle may be determined in order to determine the upcoming section of the road, the ego-vehicle is going to travel. The size of the upcoming section of the road may depend on various parameters such as at least one of: the occurrence of links in the road, the curviness of the road, the velocity of the vehicle, and/or the certainty with which the route path of the ego-vehicle may be determined.

According to an aspect, the obtained characteristics of the upcoming section of the road for determining the weights include at least one of a road curvature and/or a first derivative of the road curvature. Other characteristics of the upcoming section of the road may include a road class, a road environment, such as urban or rural, and/or an allowed maximum velocity. In general, characteristics may be chosen which affect the accuracy of the calculation of the measured state vector and/or the predicted state vector.

According to an aspect, the accuracy of calculating the measured state vector may be affected by the performance of the related sensors, such as visibility of road boundaries. The visibility may be affected by external conditions such as weather conditions, road lighting conditions, day-time or night-time, and/or the quality of the road surface markings. The associated weight of the measured state vector may be adjusted according to these variables, which may be obtained from the HD map and/or other sources, such as weather data and/or current time.

According to an aspect, the "upcoming section of the road" or the "upcoming road section" is determined by analyzing the occurrence of road links in the direction the ego-vehicle is currently headed and/or by determining a most probable path along the road and/or by obtaining a planned route path of a navigation system of the ego-vehicle. For example, when no planned route path is available, the upcoming section of the road may be determined with high accuracy until the next intersection. The further upcoming section may be determined based on the most probable route path. The extent of the upcoming may also be determined in dependence on a current velocity of the ego-vehicle or an allowed maximum velocity associated with the road. Furthermore, a road may comprise essentially straight sections which alternate with more curvy sections. In case a most probably path or a planned route path is available, the road may be separated in sections according to the average curvature. The average curvature may be evaluated using data provided by the HD map. For this purpose, the road may be analyzed in sections of predetermined length, for example 50 m or 100 m, or in sections between road links. For each section, weights may be predefined or calculated based on the average or maximum road curvature.

According to an aspect the predicted state vector and the measured state vector are calculated using a Kalman filter, an extended Kalman filter, an unscented Kalman filter, or a particle filter. When a Kalman filter is used, the weights can be determined based on the Kalman gain. Independent of the used Kalman filter, it consists of two steps: a prediction step, i.e. a step of calculating the predicted state vector, and an update step, i.e. a step of calculating a new state vector by combining the predicted state vector with the measured state vector. The uncertainty of the prediction step is typically denoted by the covariance Q of the process noise. The uncertainty of the update step is typically denoted by the covariance R of the measurement noise. The Kalman gain describes the relative uncertainty of the measurement and the prediction. According to an aspect, the measurement noise R may be assumed as constant. Accordingly, in order to vary the weights, only the uncertainty Q of the prediction is varied according to the road characteristics. In one example, a plurality of pre-defined Q matrices may be stored for different road situations such as for at least some of the following examples: straight road, highway, curvy road, mountain road, city road. In another example, the Q matrix (and thus the weights) may be changed by multiplying a default Q matrix with a normalized road curvature value, i.e. $Q_{new} = c_{avg}/c_{default} * Q_{default}$, where $c_{avg}$ is an average of road curvature values of an upcoming section of the road the ego-vehicle is currently travelling on.

According to an aspect, if an average or maximum road curvature of the upcoming section of the road is smaller than a predefined threshold, the weight of the predicted state vector is increased and/or the weight of the measured state vector is decreased. In other words, if the upcoming road section is (mostly) straight, the process of predicting the state vector may provide a more reliable estimate than the measured state vector. Thus, a very reliable prediction of the location of the ego-vehicle with respect to the lane boundary can be obtained when driving on an (essentially) straight road.

According to an aspect, if the average or maximum road curvature of the upcoming section of the road is higher than or equal to the predefined threshold, the weight of the predicted state vector is decreased and/or the weight of the measured state vector is increased. In other words, if the upcoming road section is very curvy, the measured state vector provides a more reliable estimate of the true state vector. Thus, a reliable measurement of the location of the ego-vehicle with respect to the lane boundary can be obtained when driving on a curvy road.

According to an aspect, the threshold of the road curvature is chosen by comparing the accuracy of the process of predicting the state vector with the accuracy of the process of measuring the state vector. For example, a statistical evaluation can be performed using a test vehicle. Alternatively, the threshold may be set dynamically by evaluating sensor data. By dynamically setting the threshold, the accuracy of locating the ego-vehicle's position with respect to the lane boundary may be improved.

According to an aspect, characteristics of the upcoming section of the road are obtained from trajectories of at least one leading vehicle. This way, reliable data about the upcoming road section may be obtained, for example in a case, when no information is available from a map. According to an aspect, the trajectories of at least one leading vehicle may be obtained by wireless communication with the at least one leading vehicle or by communication with a server.

According to an aspect the weights are determined by selecting the weights based on a situational setting of the ego-vehicle. For example, the situational setting may be provided by the HD map in accordance with the present location of the ego-vehicle. Situational settings may include at least one of: driving on a highway, driving on a rural road, driving within urban environments, driving on a mountain road, etc. The situational setting may be derived from road classes and/or associated speed limits provided, for example, by the HD map.

According to an aspect, an information processing device for determining a current state vector describing location and heading of an ego-vehicle with respect to a lane boundary of a road is provided. In particular, the information processing device is configured for executing a method according to an aspect described herein.

According to an aspect, the information processing device comprises a sensor module for providing sensor data obtained from at least one road sensor for detecting the lane boundaries of the road. According to an aspect the at least one road sensor includes at least one of a camera, a LiDAR, and/or a radar sensor. In particular, the at least one road sensor acquires image data of the road surface in order to detect road surface markings such as lane boundaries. The process of calculating the measured state vector may thus comprise the acquisition of image data and image processing of the acquired image data.

According to an aspect, the information processing device comprises an ego-motion module for providing motion state data related to current heading and current velocity of the ego-vehicle. The ego-motion module may receive sensor data from at least one motion sensor. For example, the ego-motion module may receive sensor data related to a current heading of the ego-vehicle from a steering angle sensor and/or from a GNSS/IMU and/or a compass. Furthermore, the ego-motion module may receive sensor data related to a current velocity of the ego-vehicle from a velocity sensor. By providing motion state data, it may be possible to calculate a predicted state vector of the ego-vehicle on the basis of a previous state vector. In other words, the motion state data may be used as input for a transition function which maps a previous state vector onto a predicted state vector.

According to an aspect, the information processing device comprises a processing module, which may comprise one or more central processing units, one or more memory units (RAM), and one or more storage units (ROM). In particular, the processing module may be configured as one or more electronic control units (ECU). According to an aspect, the processing module is configured for executing a method according to an aspect as described herein.

According to an aspect, the information processing device further comprises a storage module for storing a high definition (HD) map providing road curvature information. Additionally or alternatively, the information processing device may communicate with a server to obtain road curvature information from a HD map stored at the server. For this purpose the information processing device may comprise a communication module adapted for wireless communication with the server.

According to an aspect, the information processing device further comprises a location module for providing current location information based on sensor data obtained from at least one location sensor of the ego-vehicle. The at least one location sensor may receive location data from a Global Navigation Satellite System (GNSS). Furthermore, the at least one sensor may comprise an Inertial Measurement Unit (IMU). Data obtained from the GNSS and the IMU may be combined by the location module in order to improve the location accuracy. The location information provided by the location module may be used in order to localize the ego-vehicle on a HD map.

According to an aspect, the processing module is configured for determining the upcoming section of the by analyzing the occurrence of road links in the direction the ego-vehicle is currently headed and/or by determining a most probable path along the road and/or by obtaining a planned route path of a navigation system of the ego-vehicle.

BRIEF DESCRIPTION OF THE DRAWINGS

Fig. 1 is a schematic top view of a vehicle travelling along the right lane of a road.

Fig. 2 shows a process flow schematically illustrating a method according to an embodiment.

Fig. 3 shows an exemplary configuration of an information processing device according to an aspect.

DETAILED DESCRIPTION OF THE INVENTION

Fig. 1 is a schematic top view of a vehicle EV (i.e., the ego-vehicle) travelling along the right lane of a road. The position of the ego-vehicle with respect to the right lane boundary $l_{right}$ is described by a four-dimensional state vector $X = \begin{pmatrix} y_{off} \\ \beta \\ c_0 \\ c_1 \end{pmatrix}$, wherein $y_{off}$ describes the offset between a reference point of the ego-vehicle to the lane boundary, $\beta$ describes the angle between the right lane boundary and the ego-vehicle's movement (i.e. the heading of the ego-vehicle), $c_0$ describes the curvature of the lane boundary, and $c_1$ describes the rate of change (first derivative) of $c_0$.

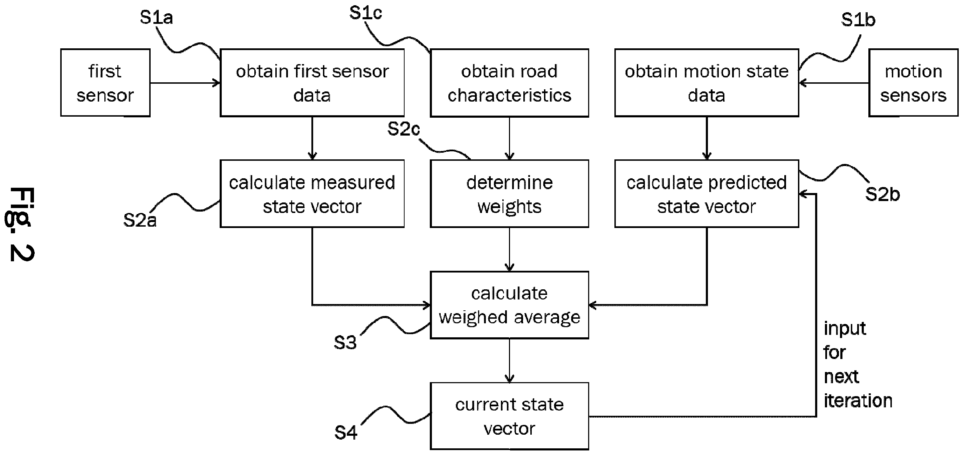

Fig. 2 shows a process flow schematically illustrating a method according to an embodiment. This method may be executed by an information processing device of an ego-vehicle.

In a step S1a, first sensor data is obtained from a first road sensor of the ego-vehicle. The ego-vehicle may comprise more than one road sensor. Accordingly, second sensor data, third sensor data, and/or fourth sensor data, etc. may be generated by a second road sensor, a third road sensor, and/or a fourth road sensor, etc. In particular, the sensors may be optical sensors such as cameras or a LiDAR or by radar sensors.

The sensor data may be processed by an image processing method in order to measure information related to road surface markings. In particular, the parameters of the state vector described above with reference to Fig. 1 may be extracted from the sensor data. The extracted parameters may be used to calculate a measured state vector (S2a).

In another step S1b which may be executed at the same time as step S1a, motion state data is obtained from motion sensors of the ego vehicle. In particular, a heading and a velocity of the ego-vehicle may be obtained from at least one first motion sensor measuring the heading of the ego vehicle and at least one second motion sensor measuring the velocity of the ego-vehicle.

In step S2b, a predicted state vector may be calculated from a previous state vector based on the obtained motion state data. For example, a process of dead reckoning may be executed to predict the state vector. For example, in a case that the heading (direction) and the velocity of the ego-vehicle are known with a certain accuracy, the current position (state vector) may be predicted with a corresponding accuracy by starting from the last known position and adding a translation based on the elapsed time and the current velocity in the measured direction. When the ego-vehicle is moving along a straight road section, this process may yield a relatively high accuracy.

In some embodiments, step S2b may correspond to a prediction step implemented by a Kalman filter. In particular, a predicted state vector $X_k$ may be calculated from a previous state vector $X_{k-1}$ using a state transition model $F_k$ which models the progression of the state vector. The transition model may be determined according to the current motion state as determined in step S1b.

A Kalman filter is implemented as a recursive estimator. Thus the predicted sate vector and the previous state vector are expressed for a given iteration (time) k. In other words, the Kalman filter is suitable for describing linear dynamical systems discretized in time domain. Perturbations (i.e. uncertainties) are assumed to be dominated by Gaussian noise. At each discrete time increment, a linear operator is applied to the previous state to generate the new state with an uncertainty. The following equation describes the predicted state transition:

$$X_k = F_k X_{k-1} + \omega_k$$

The process noise $\omega_k$ may assumed to be drawn from a zero mean multivariate normal distribution with covariance $Q_k$.

Similarly, the measurement (or update) step S2a can be described by a measurement function:

$$Z_k = H_k X_k + v_k$$

Here, the measured state vector $Z_k$ is obtained by applying the observation model $H_k$ which maps the true state space into the observed space. The observation noise $v_k$ may assumed to be drawn from a zero mean Gaussian distribution with covariance $R_k$.

A weighted average of the measured state vector and the predicted state vector may be calculated in step S3. The weights may be determined in step S2c based on road characteristics obtained previously in step S1c. When using a Kalman filter model, the weights may be calculated in from the covariance $Q_k$ and the covariance $R_k$. The uncertainty of the measurement mainly depends on parameters related to the visibility of the lane markings. According to an aspect, the covariance $R_k$ may be assumed to be constant. Then, only the covariance $Q_k$ related to the prediction needs to be adjusted, for example in dependence on the expected curvature of the road, which may be derived from a map. This way, the performance of the Kalman filter may be adjusted according to road characteristics such that an improved accuracy may be obtained. The covariance $Q_k$ is a matrix. The higher the values in $Q_k$ are compared to those in $R_k$, the more the resulting weighted state vector moves towards the measured state vector. In other words, incoming measurements have a higher impact than the prediction. The lower the values in $Q_k$ are compared to those in $R_k$, the more the resulting weighted state vector moves towards the predicted state vector. In other words, incoming measurements have a rather low impact on the resulting weighted state vector. When driving on a curvy road, the a higher weight will be given to the measured state vector, whereas then driving on a mostly straight road such as a highway, a better result with lower uncertainty is obtained by giving a higher weight to the predicted state vector.

As a result of the method, a current state vector may be obtained in step S4 as the weighted average of the measured state vector and the predicted state vector. This current state vector may be used in step S2b as the new input previous state vector in the next iteration of the method.

The method may be executed at discretized time intervals, for example with a repetition rate corresponding to a frame rate of a camera as one of the ego-vehicle's sensors for detecting road surface markings. A typical frame rate is 20 or 25 frames per second (fps). The repetition rate may be adapted to the current velocity of the ego-vehicle or depend on the weight of the measured state vector. In case the weight of the measured state vector is high, a high repetition rate may be used in order to take into account as many measurements as possible. If a low weight is given to the measured state vector, the ego-vehicle may be driving along an essentially straight road, such that it may be sufficient to determine the ego-vehicle's location less frequently, for example once per second or once per ten seconds.

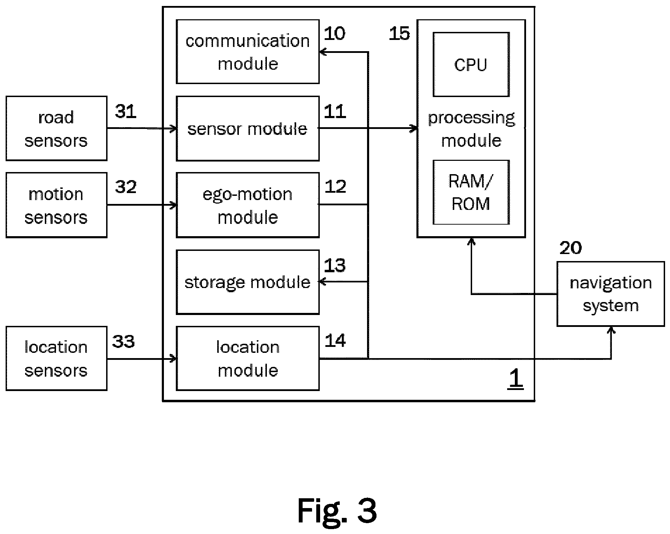

Fig. 3 schematically illustrates an exemplary embodiment of an information processing device 1 for determining a current state vector describing location and heading of an ego-vehicle (EV) with respect to a lane boundary of a road. The information processing device 1 may comprise a communication module 10, a sensor module 11, an ego-motion module 12, a storage module 13, a location module 14, and a processing module 15. Some or all components of the information processing device 1 may be implemented as separate physical modules or as functional modules of an electronic control unit (ECU).

The communication module 10 may comprise at least one interface for communicating with a server via a wireless connection such as a mobile data network. Via the communication module 10, data may be sent to and/or received from the server. For example, the communication module 10 may receive map information from the server, which may then be stored in the storage module 13. Furthermore, the communication module 10 may be configured to communicate with other vehicles, for example for receiving trajectory information of leading vehicles.

The sensor module 11 may provide road sensor data obtained from at least one road sensor 31 of the ego-vehicle for detecting the lane boundaries of the road. The at least one road sensor 31 may include sensors such as at least one front facing perspective camera, at least one side-facing fisheye camera, at least one LiDAR, and/or at least one radar. Thus, the sensor module 11 may comprise a plurality of interfaces for receiving sensor data from a plurality of road sensors of the ego-vehicle. In particular, the sensor module 11 may be configured to provide the sensor data to the processing module 15.

The ego-motion module 12 may provide motion state data obtained from at least one motion sensor 32 of the ego-vehicle. The at least one motion sensor 32 may be configured for measuring at least one of a heading and/or a velocity of the ego-vehicle. In particular, the ego-motion module 12 may be configured to provide the motion state data to the processing module 15.

The storage module 13 may store a plurality of different data, including at least one of sensor data, motion data, map data, location data, trajectory data, and/or results computed by the processing module 15. The stored data may be accessed by the processing module 15 for further processing.

The location module 14 may provide current location information based on sensor data obtained from at least one location sensor 33 of the ego-vehicle. The at least one location sensor 33 may receive location data from a Global Navigation Satellite System (GNSS). Furthermore, the at least one sensor may comprise an Inertial Measurement Unit (IMU). Data obtained from the GNSS and the IMU may be combined by the location module in order to improve the location accuracy. The location information provided by the location module 14 may be used by the processing module 15 in order to localize the ego-vehicle on a HD map. Furthermore, the location module 14 may provide location information to a navigation system 20 of the ego-vehicle.

The processing module 15 may comprise at least one central processing unit (CPU), a random access memory (RAM), and read-only memory (ROM). The processing module 15 may interact and/or control and/or receive data from at least one of the communication module 10, the sensor module 11, the ego-motion module 12, the storage module 13, and the location module 14. Furthermore, the processing module 15 may receive data from the navigation system 20.

In some embodiments, functions of the processing module 15 may be implemented in a geographically distant server. The data to be processed may then be transferred to the server by means of the communication module 10. The calculated results, such as the current state vector, may then be transferred from the server to the information processing device 1.

The features described in herein can be relevant to one or more embodiments in any combination. The reference numerals in the claims have merely been introduced to facilitate reading of the claims. They are by no means meant to be limiting.

Throughout this specification various embodiments have been discussed. However, it should be understood that the invention is not limited to any one of these. It is therefore intended that the foregoing detailed description be regarded as illustrative rather than limiting.

## Claims

1. Method for determining a current state vector describing location and heading of an ego-vehicle (EV) with respect to a lane boundary of a road, the method comprising:

   obtaining road sensor data from at least one road sensor (31) of the ego-vehicle (EV) detecting the lane boundaries of the road;
   calculating a measured state vector of the ego-vehicle (EV) from the road sensor data;
   obtaining motion state data from at least one motion sensor (32) of the ego-vehicle (EV) measuring heading and velocity of the ego-vehicle (EV);
   calculating a predicted state vector of the ego-vehicle (EV) based on the motion state data of the ego-vehicle and a previous state vector of the ego-vehicle (EV); and
   determining a current state vector by calculating a weighted average of the measured state vector and the predicted state vector of the ego-vehicle (EV), wherein the weights are determined based on characteristics of an upcoming section of the road.

2. Method according to claim 1, wherein the characteristics of the upcoming section of the road are obtained from a high definition (HD) map based on current location information of the ego-vehicle (EV) obtained from at least one location sensor (33) of the ego-vehicle (EV).

3. Method according to claim 2, wherein the obtained characteristics of the upcoming section of the road for determining the weights include at least one of a road curvature (co) and/or a first derivative ($c_1$) of the road curvature.

4. Method according to at least one of the preceding claims, wherein the upcoming section of the road is determined by analyzing the occurrence of road links in the direction the ego-vehicle (EV) is currently headed and/or by determining a most probable path (MPP) along the road and/or by obtaining a planned route path of a navigation system (20) of the ego-vehicle (EV).

5. Method according to at least one of the preceding claims, wherein the predicted state vector and the measured state vector are calculated using a Kalman filter, an extended Kalman filter, an unscented Kalman filter, or a particle filter.

6. Method according to at least one of the preceding claims, wherein, if an average or maximum road curvature of the upcoming section of the road is smaller than a predefined threshold, the weight of the predicted state vector is increased and/or the weight of the measured state vector is decreased.

7. Method according to at least one of the preceding claims, wherein, if the average or maximum road curvature of the upcoming section of the road is higher than or equal to the predefined threshold, the weight of the predicted state vector is decreased and/or the weight of the measured state vector is increased.

8. Method according to at least one of the preceding claims, wherein characteristics of the upcoming section of the road are obtained from trajectories of at least one leading vehicle.

9. Method according to claim 1, wherein the weights are determined by selecting the weights based on a geographical situation of the ego-vehicle (EV).

10. Information processing device (1) for determining a current state vector describing location and heading of an ego-vehicle (EV) with respect to a lane boundary of a road, the device comprising:

a sensor module (11) for providing road sensor data obtained from at least one road sensor (31) for detecting the lane boundaries of the road;
an ego-motion module (12) for providing motion state data obtained from at least one motion sensor (32) measuring heading and velocity of the ego-vehicle (EV); and
a processing module (15) configured for:

- calculating a measured state vector of the ego-vehicle (EV) from the road sensor data;
- calculating a predicted state vector of the ego-vehicle (EV) based on the motion state data of the ego-vehicle (EV) and a previous state vector of the ego-vehicle (EV); and
- determining a current state vector by calculating a weighted average of the measured state vector and the predicted state vector of the ego-vehicle (EV), wherein the weights are determined based on characteristics of an upcoming section of the road.

11. The Information processing device (1) according to claim 10, wherein the at least one road sensor (31) is at least one of a camera, a LiDAR, and/or a radar sensor.

12. The Information processing device (1) according to claim 10 or 11, further comprising:

a storage module (13) storing a high definition (HD) map providing road curvature information;
a location module (14) for obtaining current location information of the ego-vehicle (EV) from at least one location sensor (33); and
wherein the processing module (15) is configured for determining the weights based on at least one of a road curvature and/or a first derivative of the road curvature of the upcoming section of the road.

13. The Information processing device (1) according to claim 12, wherein the processing module (15) is configured for determining the upcoming section of the by analyzing the occurrence of road links in the direction the ego-vehicle (EV) is currently headed and/or by determining a most probable path (MPP) along the road and/or by obtaining a planned route path of a navigation system (20) of the ego-vehicle (EV).

14. The Information processing device (1) according to at least one of claims 10 to 13, wherein, if an average or maximum road curvature of the upcoming section of the road is smaller than a predefined threshold, the processing module (15) is configured for increasing the weight of the predicted state vector and/or for decreasing the weight of the measured state vector.

**15.** The Information processing device (1) according to at least one of claims 10 to 14, wherein, if the average or maximum road curvature of the upcoming section of the road is higher than or equal to the predefined threshold, the processing module (15) is configured for decreasing the weight of the predicted state vector and/or for increasing the weight of the measured state vector.

Fig. 1

Fig. 2

# Fig. 3

Europäisches
Patentamt

European
Patent Office

Office européen
des brevets

# EUROPEAN SEARCH REPORT

Application Number

EP 19 15 0772

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/191461 A1 (ZENG SHUQING [US]) 29 July 2010 (2010-07-29) | 1-5,8-13 | INV. G08G1/16 B60W30/12 |
| Y | * claims 7,8,16 * <br> * figures 1-11 * <br> * paragraphs [0006] - [0010], [0016], [0019] - [0030], [0040] - [0047], [0035] - [0054] * <br> ----- | 6,7,14, 15 | |
| Y | US 2012/215377 A1 (TAKEMURA MASAYUKI [JP] ET AL) 23 August 2012 (2012-08-23) <br> * figures 8-10,13-16 * <br> * paragraphs [0071] - [0073], [0085] - [0108], [0116] - [0117], [0126] - [0128] * <br> * paragraphs [0136] - [0137], [0142] - [0145], [0149] - [0150], [0155] - [0157] * <br> * paragraphs [0159] - [0162], [0165] - [0171], [0184] - [0193] * <br> ----- | 6,7,14, 15 | |

TECHNICAL FIELDS SEARCHED (IPC)

G08G
B60W
G01S
G01C

The present search report has been drawn up for all claims

| Place of search | Date of completion of the search | Examiner |
|---|---|---|
| The Hague | 22 July 2019 | Datondji, Sokèmi |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 15 0772

This annex lists the patent family members relating to the patent documents cited in the above-mentioned European search report.
The members are as contained in the European Patent Office EDP file on
The European Patent Office is in no way liable for these particulars which are merely given for the purpose of information.

22-07-2019

| Patent document cited in search report | | | Publication date | Patent family member(s) | | | Publication date |
|---|---|---|---|---|---|---|---|
| US 2010191461 | A1 | | 29-07-2010 | CN | 101793528 | A | 04-08-2010 |
| | | | | DE | 102010005293 | A1 | 02-09-2010 |
| | | | | US | 2010191461 | A1 | 29-07-2010 |
| US 2012215377 | A1 | | 23-08-2012 | CN | 102481931 | A | 30-05-2012 |
| | | | | DE | 112010003874 | T5 | 19-07-2012 |
| | | | | JP | 5286214 | B2 | 11-09-2013 |
| | | | | JP | 2011073529 | A | 14-04-2011 |
| | | | | US | 2012215377 | A1 | 23-08-2012 |
| | | | | WO | 2011040119 | A1 | 07-04-2011 |

EPO FORM P0459

For more details about this annex : see Official Journal of the European Patent Office, No. 12/82